# FASCICULE DE BREVET EUROPEEN

(11) **EP 4 373 741 B1**
(45) Date de publication et mention de la délivrance du brevet: **07.10.2026**
(21) Numéro de dépôt: 22757621.2
(22) Date de dépôt: 21.07.2022
(51) Int. Cl.: B64B 1/06, B64B 1/28, B64D 27/34, B64D 27/355

(54) **NACELLE DE PRODUCTION D'ENERGIE ELECTRIQUE POUR UN DIRIGEABLE**
ENERGIEERZEUGENDE GONDEL FÜR EIN LUFTSCHIFF
POWER-GENERATING NACELLE FOR AN AIRSHIP

(30) Priorité: 21.07.2021 FR 2107881
(43) Date de publication de la demande: 29.05.2024
(73) Titulaire: Flying Whales, 92150 Suresnes (FR)
(72) Inventeur: GUILLOU, Pierrot, 92150 SURESNES (FR); TAILLARDAT, Clémence, 92150 SURESNES (FR)
(74) Mandataire: IP Trust
(86) Numéro de dépôt international: PCT/FR2022/051454
(87) Numéro de publication internationale: WO 2023/002133

(56) Documents cités:
- WO-A1-2020/159402
- DE-U1- 202018 003 924
- JP-A- 2005 053 353
- US-A- 5 368 256
- US-A1- 2018 022 461
- US-A1- 2018 319 476

## Description

### DOMAINE DE L'INVENTION

Le domaine de l'invention est celui de dirigeables de structure rigide à propulsion électrique, conçus pour le transport de charges lourdes, et plus particulièrement celui de la structure mécanique de nacelles de production d'énergie électrique équipant ces dirigeables.

### ETAT DE LA TECHNIQUE

Pour l'alimentation en énergie électrique de dirigeables à propulsion électrique, plusieurs voies technologiques peuvent être envisagées parmi lesquelles l'utilisation d'un turbogénérateur ou d'une pile à combustible.

Pour l'une ou l'autre de ces voies technologiques visant à procurer un système embarqué de génération électrique, se pose la question de la sécurité du dirigeable dans le cas d'une défaillance du système de génération électrique. En particulier, dans le cas de l'utilisation d'un turbogénérateur, une défaillance mécanique de l'arbre de la turbine peut entraîner la projection à grande vitesse de pièces mécaniques qui peuvent heurter le corps principal du dirigeable et le mettre en situation de péril. Il faut également prendre en compte le risque feu induit par le fonctionnement d'un turbogénérateur en cas de risque de fuite de carburant. De même dans l'utilisation d'une pile à combustible, il existe des risques technologiques dus à la présence de gaz hydrogène.

Pour ces raisons, il est généralement prévu de disposer ces systèmes de génération électrique - qui peuvent être de forte puissance - à l'extérieur du corps principal du dirigeable. On limite ainsi les risques de propagation d'un feu naissant au niveau d'un turbogénérateur ou de destruction de la structure mécanique du dirigeable du fait d'une projection de pièces mécaniques. Il existe déjà des architectures de dirigeable comportant des nacelles intégrant des systèmes d'énergie électrique et reliés mécaniquement au corps du dirigeable, voir WO 2020/159402 A1.

La réalisation de telles nacelles pose toutefois des problèmes techniques dès lors que l'on vise de hauts niveaux de puissance électriques, tant pour des raisons d'optimisation de masse que de sécurité de la liaison mécanique entre ces nacelles et le corps du dirigeable.

Un objectif de la présente invention est de résoudre ces problèmes en proposant une nouvelle structure de nacelle de génération électrique mise en œuvre dans un dirigeable à propulsion électrique.

### EXPOSE DE L'INVENTION

Cet objectif est atteint avec une nacelle selon la revendication 1.

Les barres ou câbles de hauban peuvent par exemple comprendre une barre ou un câble de liaison avant, une barre ou un câble de liaison arrière et une barre ou un câble de liaison haute.

La structure mécanique de nacelle peut par exemple être réalisée sous la forme d'un treillis de poutres/tubes composites. Mais on peut aussi envisager pour la réalisation de cette structure mécanique l'utilisation de bien d'autres matériaux et techniques dès lors que celles-ci sont compatibles avec les standards de sécurité en matière de feu et avec la classification zonale. On peut ainsi envisager l'utilisation de lisses, cadres ou peaux rivetées. On peut aussi prévoir une structure de nacelle réalisée par moulage. Par ailleurs, des protections thermiques peuvent être prévues pour des parties de la structure mécanique de nacelle qui présentent un risque d'exposition au feu.

Une nacelle peut en outre comprendre des moyens de treuil pour contrôler la descente d'une unité de génération d'énergie électrique, lesdits moyens de treuil étant fixés à la partie supérieure de la structure de nacelle. On peut aussi prévoir l'utilisation d'équipements de support au sol (GSE : « ground Support Equipements » ) pour la dépose des unités de génération d'énergie électrique.

Au moins une nacelle carénée peut en outre comprendre une enveloppe comportant une partie rigide qui peut en outre comprendre des ouvertures pour au moins une entrée de ventilation et au moins une sortie de ventilation de la nacelle.

L'enveloppe de nacelle peut en outre comprendre une partie semi-rigide disposée entre le corps principal du dirigeable et la partie rigide, cette partie semi-rigide pouvant comprendre une sortie d'évacuation pour le refroidissement d'un système de stockage d'énergie électrique et au moins une ouverture pour le passage d'une barre ou d'un câble faisant fonction de hauban.

L'enveloppe de nacelle peut en outre comprendre une partie souple s'étendant depuis la partie rigide vers une extrémité distale de la nacelle qui est équipée d'un dispositif lumineux de position.

Dans une première configuration, la ou les unités de génération d'énergie électrique peuvent comprendre au moins un turbogénérateur. Dans cette configuration, la partie rigide de la nacelle peut comprend en outre au moins une ouverture pour la sortie des gaz d'échappement de ce turbogénérateur.

Dans une seconde configuration, la ou les unités de génération d'énergie électrique peuvent comprendre au moins un système de pile à combustible.

Dans un autre mode de réalisation d'une nacelle équipant un dirigeable selon l'invention, au moins une des nacelles carénées peut en outre comprendre une enveloppe en matériau souple tendue sur une pluralité d'arceaux entourant ladite nacelle.

Suivant un autre aspect de l'invention, il est proposé un dirigeable selon la revendication 12.

### BREVE DESCRIPTION DES FIGURES

La figure 1 représente une vue latérale d'un exemple de réalisation d'un dirigeable équipé de deux nacelles de production d'énergie électrique.
La figure 2 illustre un exemple de couplage mécanique d'une nacelle à la structure rigide d'un dirigeable selon l'invention.
La figure 3 illustre un exemple de réalisation d'une enveloppe d'une nacelle de production d'énergie électrique selon l'invention.
La figure 4 illustre une structure mécanique d'une nacelle de production d'énergie électrique selon l'invention.
La figure 5 illustre une implantation de la structure mécanique de la nacelle par rapport à celle du dirigeable.

### DESCRIPTION DETAILLEE

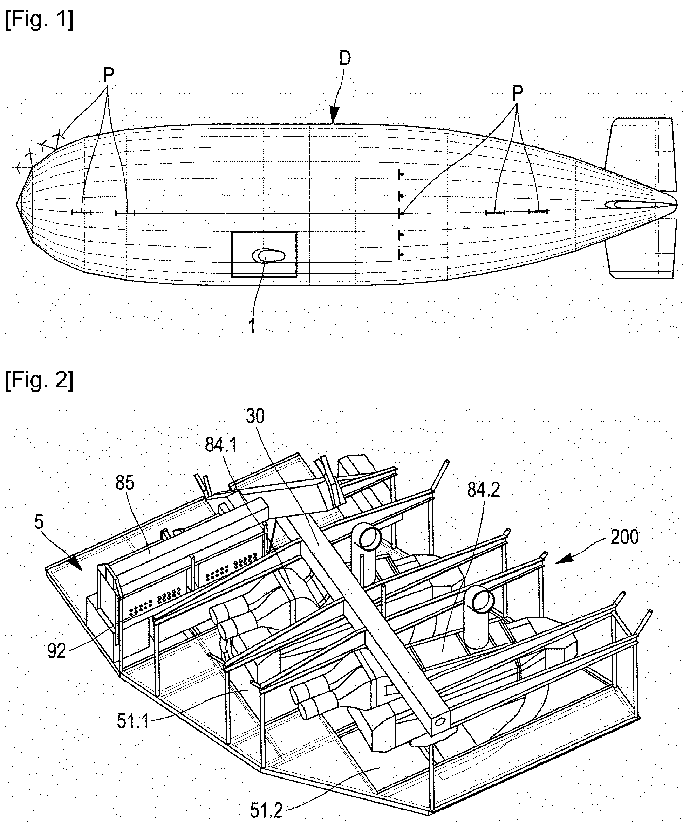

En référence à la figure 1, un dirigeable de structure rigide D comporte un ensemble de groupes propulseurs P alimentés en énergie électrique à partir de systèmes de production d'énergie électrique intégrés dans deux nacelles externes 1 en forme de nageoire (dont une seule est représentée sur la figure 1).

Une nacelle en forme de nageoire 1 comprend une structure mécanique 300 réalisée à partir de treillis de poutres en matériau composite et recouverte d'une peau de coque ou de carénage 10. Cette structure mécanique 300 comprend une partie 30 de liaison entre une partie supérieure 31 prévue pour porter deux turbogénérateurs 84.1,84.2 et une partie inférieure 9.

La partie supérieure 31 de la structure mécanique est reliée à un cadre 4 du corps principal du dirigeable via une interface mécanique 3 et trois câbles 7,70,71.

La nacelle 1 intègre deux groupes turbogénérateurs 84.1,84.2 montés suspendus à la partie supérieure 31 de la structure mécanique de la nacelle 1, un système de batteries de stockage 85, et un plancher 5.

Ce plancher 5 comprend une voie d'accès 50 depuis l'intérieur du dirigeable D dans la nacelle 1, et une partie de plancher 52 entourant les deux turbogénérateurs 84.1,84.2. Des parties évidées 51 sont ménagées dans le plancher 5 pour permettre une dépose des turbogénérateurs au moyen de treuils prévus sur la partie supérieure 31 de la structure mécanique. Il est à noter que la présente invention peut tout autant être mise en œuvre dans une nacelle qui ne dispose pas d'un plancher.

Les deux turbogénérateurs 84.1,84.2 sont reliés en sortie à un système de conversion d'énergie 85 à un système de batteries de stockage 92 qui sont reliées à un système de distribution électrique au sein du dirigeable.

Cette nacelle est outre pourvue d'un système de gestion thermique conçu pour refroidir les turbogénérateurs, et ventiler les enceintes de confinement contenant ces turbogénérateurs, refroidir les systèmes de conversion d'énergie et de batteries de stockage. La peau de la nacelle devra ainsi accueillir l'ensemble des interfaces des systèmes internes à la nacelle avec l'extérieur, notamment des conduits d'entrée d'air, des conduits d'évacuation de gaz ou des drains.

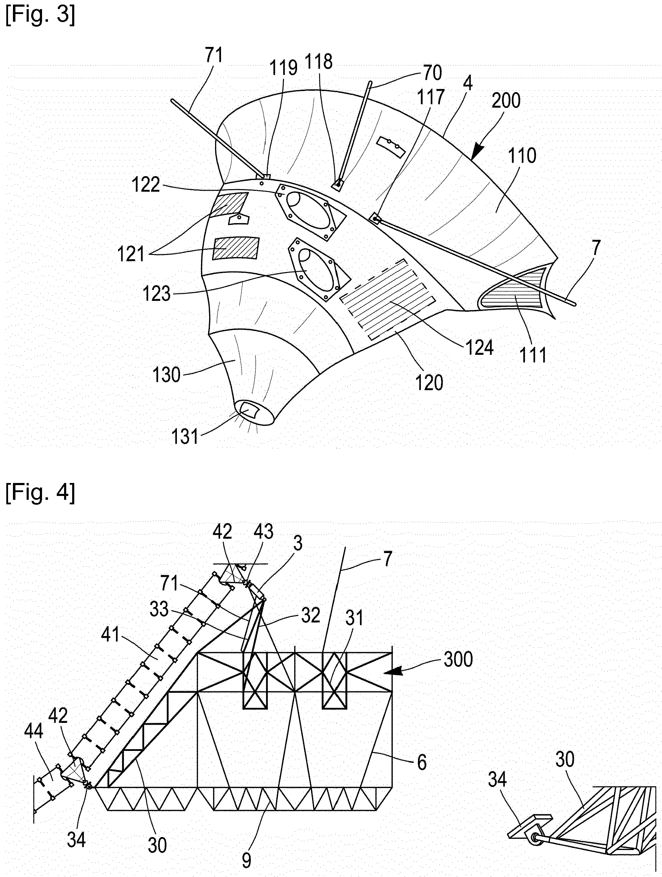

Dans un exemple pratique de réalisation d'une nacelle illustré par la figure 3, l'enveloppe de nacelle 200 comprend une partie de peau semi-rigide 110 disposée contre la structure mécanique 4 du dirigeable, une partie de peau rigide 120 couvrant sensiblement les turbogénérateurs et une partie de peau souple 130 couvrant l'extrémité distale de la nacelle en forme de nageoire, cette extrémité distale étant pourvue d'un dispositif lumineux de position 131.

La partie de peau rigide 120, réalisée par exemple à partir d'un matériau composite, comporte des ouvertures 121 pour recevoir des conduits d'entrée d'air destinés à la ventilation de la nacelle, des ouvertures 123 pour recevoir des conduits d'évacuation des gaz de combustion des turbogénérateurs, et des ouvertures 124 pour recevoir des grilles de sortie de ventilation de la nacelle.

La partie de peau semi-rigide 110, réalisée par exemple dans un matériau de type polymère pour filet, comprend une grille d'évacuation 111 du refroidissement d'un système de batteries intégré dans la nacelle, et des ouvertures 117,118,119 prévues pour laisser passer les câbles de hauban 7,70,71 reliant la structure mécanique de la nacelle à celle du dirigeable.

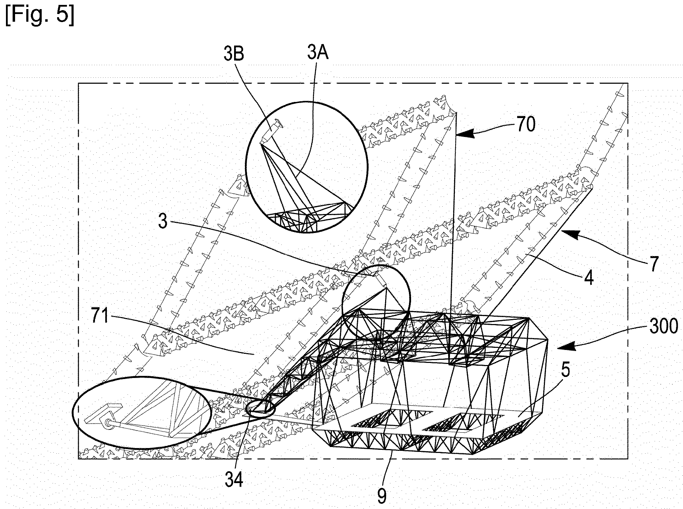

Dans un exemple particulier de réalisation d'une structure mécanique de nacelle illustré par les figures 5 et 6, la structure mécanique 300, réalisée par assemblage en treillis de tubes en matériau composite, comprend une partie de liaison 30 fixée à ses deux extrémités respectivement supérieure et inférieure par respectivement une interface de liaison mécanique 3 de type « fail safe » et une articulation 34 à des poutres en treillis structurelles longitudinales 44,42 dont des extrémités sont reliées à des poutres en treillis périphériques 41,44 dans la structure du corps principal du dirigeable.

Cette partie de liaison 30 est reliée rigidement d'une part à une partie supérieure 31 conçue pour porter en suspension deux turbogénérateurs et leurs équipements auxiliaires, et d'autre part à une partie inférieure 9 prévue pour recevoir un plancher 5 permettant à un opérateur d'accéder depuis l'intérieur du dirigeable auprès des turbogénérateurs à des fins de maintenance. Des pièces de structure mécanique 6 sont disposées entre la partie supérieure 31 et la partie inférieure afin de rigidifier la structure mécanique 300 de la nacelle. La structure mécanique est en outre reliée à la structure mécanique 4 du corps principal du dirigeable au moyen de trois câbles ou tiges 7,70,71 faisant fonction de hauban, chacun de ces câbles ou tiges ayant une première extrémité inférieure fixée en un point de la partie supérieure de la structure de nacelle 300 et une seconde extrémité supérieure fixée en un point de la structure mécanique 4 du corps principal du dirigeable.

On peut par exemple prévoir une premier câble 7 de liaison avant entre un point de la partie supérieure de la structure mécanique de nacelle 300 et un point de la structure rigide 4 du dirigeable situé en avant de la nacelle, un second câble 70 de liaison haute entre un point de la partie supérieure de la structure mécanique de nacelle et un point situé sur une partie haute de la structure rigide du dirigeable surplombant la nacelle, et un troisième câble 71 de liaison arrière entre un point de la partie supérieure de la structure mécanique de nacelle et un point de la structure rigide du dirigeable situé en arrière de la nacelle.

En cas d'une poussée violente vers le bas subie par la nacelle menant à la rupture du câble de rétention principal ou de débris sectionnant ce câble principal, l'interface de liaison « fail safe » 3 remplit sa fonction et commute mécaniquement en mode « safe » en réalisant une liaison mécanique secondaire en attente, ce qui évite une dégradation de la structure mécanique du dirigeable. La nacelle se trouve alors retenue par les câbles de hauban 7,70,71, ce qui évite la perte de cette nacelle.

L'interface de liaison « fail safe » 3 peut par exemple être réalisée par une barre avec chappe d'attente, un piston mécanique 3B et un câble faiblement chargé 3A.

Bien sûr d'autres modes de réalisation d'une structure mécanique d'une nacelle selon l'invention peuvent être envisagés sans sortir du cadre de la présente invention. En particulier, on peut envisager d'autres géométries de l'enveloppe que celle qui vient d'être décrite.

## Revendications

1. Nacelle (1, 200) pour un dirigeable (D) comportant un corps principal ayant une structure rigide (4) entourant une pluralité de conteneurs d'un gaz plus léger que l'air et des propulseurs électriques, cette nacelle (1, 200) comprenant au moins une unité de génération d'énergie électrique (84.1,84.2) pour alimenter lesdits propulseurs électriques, ladite nacelle (1, 200) étant carénée et comprenant une structure mécanique (300) prévue pour être reliée à la structure rigide (4) du corps principal, **caractérisée en ce que** ladite nacelle (1, 200) comporte:
(i) une interface d'articulation (34) d'un point déterminé d'une partie inférieure de ladite structure mécanique par rapport à la structure rigide,
(ii) une interface de type « fail safe » (3) configurée pour être arrangée entre un point d'une partie supérieure de ladite structure mécanique et ladite structure rigide, prévue pour maintenir une liaison mécanique secondaire d'attente au-delà d'une limite supérieure de traction prédéterminée, et
(iii) au moins une barre ou un câble (7,70,71) faisant fonction de hauban en traction entre un premier point de fixation sur la structure rigide (4) du corps principal et un second point de fixation sur la structure mécanique (300).

2. Nacelle selon la revendication précédente, dans laquelle les barres ou câbles de hauban comprennent une barre ou un câble de liaison avant, une barre ou un câble de liaison arrière et une barre ou un câble de liaison haute.

3. Nacelle selon l'une quelconque des revendications précédentes, comprenant en outre une enveloppe (200) comportant une partie rigide (120).

4. Nacelle selon la revendication précédente, dans laquelle la partie rigide (120) comprend des ouvertures pour au moins une entrée de ventilation (121) et au moins une sortie de ventilation (124) de la nacelle (1).

5. Nacelle selon la revendication précédente, dans laquelle l'enveloppe (200) comprend en outre une partie semi-rigide (110) prévue pour être disposée entre le corps principal du dirigeable et la partie rigide (120).

6. Nacelle selon la revendication précédente, dans laquelle la partie semi-rigide (110) comprend une sortie d'évacuation (111) pour le refroidissement d'un système de stockage d'énergie électrique embarqué dans la nacelle (1).

7. Nacelle selon l'une des deux revendications précédentes, dans laquelle la partie semi-rigide (110) comprend en outre au moins une ouverture (117,118,119) pour le passage d'une barre ou d'un câble (7,70,71) faisant fonction de hauban.

8. Nacelle selon l'une quelconque des revendications 3 à 7, **caractérisé en ce que** l'enveloppe (200) comprend en outre une partie souple (130) s'étendant depuis la partie rigide (120) vers une extrémité distale de ladite nacelle (200).

9. Nacelle selon l'une quelconque des revendications précédentes, dans laquelle la ou les unités de génération d'énergie électrique (84.1,84.2) comprennent au moins un turbogénérateur.

10. Nacelle selon l'une des revendications 3 ou 4 et la revendication 9, dans laquelle la partie rigide (120) comprend en outre au moins une ouverture (123) pour la sortie des gaz d'échappement du moins un turbogénérateur.

11. Nacelle selon l'une quelconque des revendications précédentes, dans laquelle la ou les unités de génération d'énergie électrique comprennent au moins un système de pile à combustible.

12. Dirigeable comportant un corps principal ayant une structure rigide (4) entourant une pluralité de conteneurs d'un gaz plus léger que l'air, une pluralité de groupes propulseurs (P) reliés mécaniquement à cette structure rigide (4) et comportant chacun un ou plusieurs moteurs électriques d'entraînement d'une hélice propulsive, **caractérisé en ce qu'**il comporte deux nacelles selon l'une quelconque des revendications précédentes disposées symétriquement de part et d'autre du corps principal, les unités de génération d'énergie électrique étant prévues pour alimenter lesdits moteurs électriques.

13. Dirigeable selon la revendication précédente, dans lequel au moins une des nacelles comprend en outre une enveloppe en matériau souple tendue sur une pluralité d'arceaux entourant ladite nacelle.

## Patentansprüche

1. Gondel (1, 200) für ein Luftschiff (D), das einen Hauptkörper aufweist, der eine starre Struktur (4) besitzt, umgebend eine Vielzahl von Behältern für ein Gas, das leichter als Luft ist, und elektrische Antriebseinheiten, diese Gondel (1, 200) umfassend mindestens eine Elektroenergieerzeugungseinheit (84.1, 84.2) zum Versorgen der elektrischen Antriebseinheiten, wobei die Gondel (1, 200) aerodynamisch verkleidet ist und eine mechanische Struktur (300) umfasst, die zum Verbundenwerden mit der starren Struktur (4) des Hauptkörpers vorgesehen ist, **dadurch gekennzeichnet, dass** die Gondel (1, 200) aufweist:
(i) eine Gelenkschnittstelle (34) eines bestimmten Punktes eines unteren Teils der mechanischen Struktur in Bezug auf die starre Struktur,
(ii) eine Schnittstelle vom Typ "Fail-Safe" (3), die zum Angeordnetwerden zwischen einem Punkt eines oberen Teils der mechanischen Struktur und der starren Struktur konfiguriert ist, die zum Aufrechterhalten einer sekundären mechanischen Bereitschaftsverbindung über eine vorbestimmte obere Zuggrenze hinaus vorgesehen ist, und
(iii) mindestens eine Stange oder ein Kabel (7, 70, 71), die/das als Zugabspannung zwischen einem ersten Befestigungspunkt an der starren Struktur (4) des Hauptkörpers und einem zweiten Befestigungspunkt an der mechanischen Struktur (300) fungiert.

2. Gondel nach dem vorstehenden Anspruch, wobei die Abspannstangen oder -kabel eine vordere Verbindungsstange oder ein vorderes Verbindungskabel, eine hintere Verbindungsstange oder ein hinteres Verbindungskabel und eine obere Verbindungsstange oder ein oberes Verbindungskabel umfassen.

3. Gondel nach einem der vorstehenden Ansprüche, ferner umfassend eine Hülle (200), aufweisend einen starren Teil (120).

4. Gondel nach dem vorstehenden Anspruch, wobei der starre Teil (120) Öffnungen für mindestens einen Belüftungseinlass (121) und mindestens einen Belüftungsauslass (124) der Gondel (1) umfasst.

5. Gondel nach dem vorstehenden Anspruch, wobei die Hülle (200) ferner einen halbstarren Teil (110) umfasst, der zum Angeordnetwerden zwischen dem Hauptkörper des Luftschiffs und dem starren Teil (120) vorgesehen ist.

6. Gondel nach dem vorstehenden Anspruch, wobei der halbstarre Teil (110) einen Abführauslass (111) für die Kühlung eines Elektroenergiespeichersystems umfasst, das an Bord der Gondel (1) ist.

7. Gondel nach einem der zwei vorstehenden Ansprüche, wobei der halbstarre Teil (110) ferner mindestens eine Öffnung (117, 118, 119) für den Durchgang einer Stange oder eines Kabels (7, 70, 71) umfasst, die/das als Abspannung fungiert.

8. Gondel nach einem der Ansprüche 3 bis 7, **dadurch gekennzeichnet, dass** die Hülle (200) ferner einen flexiblen Teil (130) umfasst, der sich von dem starren Teil (120) zu einem distalen Ende der Gondel (200) erstreckt.

9. Gondel nach einem der vorstehenden Ansprüche, wobei die eine oder die mehreren Elektroenergieerzeugungseinheiten (84.1, 84.2) mindestens einen Turbogenerator umfassen.

10. Gondel nach einem der Ansprüche 3 oder 4 und Anspruch 9, wobei der starre Teil (120) ferner mindestens eine Öffnung (123) für den Auslass der Abgase des mindestens einen Turbogenerators umfasst.

11. Gondel nach einem der vorstehenden Ansprüche, wobei die eine oder die mehreren Elektroenergieerzeugungseinheiten mindestens ein Brennstoffzellsystem umfassen.

12. Luftschiff, das einen Hauptkörper, der eine starre Struktur (4) besitzt, umgebend eine Vielzahl von Behältern für ein Gas, das leichter als Luft ist, eine Vielzahl von Antriebseinheitengruppen (P) aufweist, die mit dieser starren Struktur (4) mechanisch verbunden sind und jeweils einen oder mehrere Elektromotoren zum Treiben eines Druckpropellers aufweisen, **dadurch gekennzeichnet, dass** es zwei Gondeln nach einem der vorstehenden Ansprüche aufweist, die symmetrisch auf beiden Seiten des Hauptkörpers angeordnet sind, wobei die Elektroenergieerzeugungseinheiten zum Versorgen der Elektromotoren vorgesehen sind.

13. Luftschiff nach dem vorstehenden Anspruch, wobei mindestens eine der Gondeln ferner eine Hülle aus flexiblem Material umfasst, die über eine Vielzahl von Bügeln gespannt ist, die die Gondel umgeben.

## Claims

1. A nacelle (1, 200) for an airship (D) comprising a main body, having a rigid structure (4) surrounding a plurality of containers of a lighter-than-air gas and electric propulsion units, said nacelle (1, 200) comprising at least one electric-power-generating unit (84.1, 84.2) for powering said electric propulsion units, said nacelle (1, 200) being faired and comprising a mechanical structure (300) intended to be connected to the rigid structure (4) of the main body, **characterized in that** said nacelle (1, 200) comprises:
(i) a joint interface (34) of a specific point of a lower part of said mechanical structure relative to the rigid structure,
(ii) a "fail safe" interface (3) configured to be arranged between a point of an upper part of said mechanical structure and said rigid structure, intended to maintain a secondary standby mechanical connection beyond a predetermined upper tensile limit, and
(iii) at least a rod or a cable (7, 70, 71) functioning as a traction stay between a first point of attachment on the rigid structure (4) of the main body and a second point of attachment on the mechanical structure (300).

2. The nacelle according to the preceding claim, wherein the stay rods or stay cables comprise a front connection rod or cable, a rear connection rod or cable and a top connection rod or cable.

3. The nacelle according to either of the preceding claims, further comprising a shroud (200) having a rigid part (120).

4. The nacelle according to the preceding claim, wherein the rigid part (120) comprises openings for at least one ventilation inlet (121) and at least one ventilation outlet (124) of the nacelle (1).

5. The nacelle according to the preceding claim, wherein the shroud (200) further comprises a semi-rigid part (110) intended to be arranged between the main body of the airship and the rigid part (120).

6. The nacelle according to the preceding claim, wherein the semi-rigid part (110) comprises a discharge outlet (111) for cooling an electrical energy storage system on board the nacelle (1).

7. The nacelle according to either of the two preceding claims, wherein the semi-rigid part (110) further comprises at least one opening (117, 118, 119) for the passage of a rod or of a cable (7, 70, 71) functioning as a stay.

8. The nacelle according to any of claims 3 to 7, **characterized in that** the shroud (200) further comprises a flexible part (130) extending from the rigid part (120) toward a distal end of said nacelle (200).

9. The nacelle according to any of the preceding claims, wherein the electric-power-generating unit or units (84.1, 84.2) comprise at least one turbogenerator.

10. The nacelle according to one of claims 3 or 4 and claim 9, wherein the rigid part (120) further comprises at least one opening (123) for the outlet of exhaust gases of the at least one turbogenerator.

11. The nacelle according to any of the preceding claims, wherein the electric-power-generating unit or units comprise at least one fuel cell system.

12. An airship comprising a main body having a rigid structure (4) surrounding a plurality of containers of a lighter-than-air gas, a plurality of propulsion units (P) mechanically connected to said rigid structure (4) and each comprising one or more electric motors for driving a pusher propeller, **characterized in that** it comprises two nacelles according to any of the preceding claims arranged symmetrically on either side of the main body, the electric-power-generating units being provided for powering said electric motors.

13. The airship according to the preceding claim, wherein at least one of the nacelles further comprises a shroud of flexible material stretched over a plurality of hoops surrounding said nacelle.
